Europäisches Patentamt

European Patent Office

Office européen des brevets

(11) Veröffentlichungsnummer: **0 013 716**
A1

## (12) EUROPÄISCHE PATENTANMELDUNG

(21) Anmeldenummer: 79104845.7

(22) Anmeldetag: 03.12.79

(51) Int. Cl.³: **F 16 K 15/04,** F 16 K 17/04
// B05B9/00

(30) Priorität: 28.12.78 DE 2856546

(43) Veröffentlichungstag der Anmeldung: 06.08.80
Patentblatt 80/16

(84) Benannte Vertragsstaaten: **AT BE CH DE FR GB IT LU
NL SE**

(71) Anmelder: Werdohler Pumpenfabrik Rickmeier GmbH,
Langenholthauser Strasse, D-5983 Balve 2 (DE)

(72) Erfinder: Anhalt, Josef, Ing.-Grad., Neuenrader
Strasse 7, D-5980 Werdohl (DE)

(74) Vertreter: Hassler, Werner, Dr. et al, Patentanwälte Dr.
W. Hassler, Dipl.-Chem. F. Schrumpf Postfach 1704,
D-5880 Lüdenscheid (DE)

(54) **Druckeinstellventil für einen Hydraulikkreis.**

(57) Ein Druckeinstellventil (7) für einen Hydraulikkreis
einer Verdrängerpumpe (2) weist innerhalb einer mit einer
Rückflußleitung (12) verbundenen Ventilkammer (10) einen durch eine Feder (19) vorgespannten Ventilkörper
(21) auf. Als Ventilkörper (21) ist eine Ventilkugel vorgesehen, deren Durchmesser 0,5 bis 15% größer als der
Durchmesser der Ventilöffnung (9) ist. Die Steifigkeit der
Feder (19) ist möglichst gering.

0013716

Patentanwälte
Dr. W. Haßler
Dipl.-Chem. F. Schrumpf
Postfach 17 04

5380 Lüdenscheid

Lüdenscheid, 27. Dezember 1978 -9
A 78 186

Anmelderin: Firma Werdohler Pumpenfabrik
Rickmeier GmbH
Langenholthauser Straße
5983 Balve 2

## Druckeinstellventil für einen Hydraulikkreis

### Beschreibung

Die Erfindung betrifft ein Druckeinstellventil für einen Hydraulikkreis einer Verdrängerpumpe, wobei das Druckeinstellventil innerhalb einer mit einer Rückflußleitung verbundenen Ventilkammer einen durch eine Feder vorgespannten Ventilkörper aufweist.

Wenn an den Hydraulikkreis einer Verdrängerpumpe z.B. einer Zahnradpumpe Verbraucher wahlweise anschaltbar sind, so ergeben sich für die Voreinstellung des Druckes besondere Schwierigkeiten.

Aufgabe der Erfindung ist eine solche Ausbildung eines Druckeinstellventils der genannten Art, daß der Druck innerhalb des Hydraulikkreises im wesentlichen unabhängig von der Belastung voreinstellbar ist.

Diese Aufgabe wird nach der Erfindung dadurch gelöst, daß als Ventilkörper eine Ventilkugel vorgesehen ist, deren Durchmesser 0,5 bis 15 % größer als der Durchmesser der Ventilöffnung ist und daß die Steifigkeit der Feder möglichst klein ist.

Durch diese Einstellung des Druckeinstellventils ist gewährleistet, daß der Druck des Hydraulikkreises im wesentlichen unabhängig von der Belastung ist, weil sich der Durchflußwiderstand des Druckeinstellventils dem Durchflußwiderstand der Verbraucher des Hydraulikkreises in der Weise anpaßt, daß der Druck innerhalb des Hydraulikkreises im wesentlichen konstant bleibt. Normalerweise sind Druckschwankungen innerhalb des Hydraulikkreises von 10 % zulässig. Dieses läßt sich ohne weiteres erreichen.

Nach einer bevorzugten Ausführungsform der Erfindung ist der Durchmesser der Ventilkugel 0,5 bis 3 % größer als der Durchmesser der Ventilöffnung. Dadurch erreicht man, daß mit einem möglichst geringen Weg der Ventilkugel eine möglichst große Änderung des Durchflußquerschnitts und damit des Durchflußwiderstandes des Druckeinstellventils gewährleistet ist.

Gemäß Anspruch 3 ist vorgesehen, daß die Feder an einem die Ventilkugel übergreifenden Federteller und an einem an einer Einstellspindel sitzenden Federteller anliegt. Hierdurch ergibt sich eine sehr vorteilhafte Führung der Ventilkugel, so daß man mit der weichen Feder der beschriebenen Art eine genaue Voreinstellung des Druckes erhält.

Durch die Bemessung der Ventilkugel erreicht man eine Führung und Selbstzentrierung innerhalb der Ventilöffnung, so daß eine sichere Ventilfunktion gewährleistet ist.

Eine Zahnradpumpe wird bei einer solchen Anwendung normalerweise von einem Elektromotor angetrieben. Wenn der voreingestellte Druck auf einen hohen Wert eingestellt ist, so treten Anlaufschwierigkeiten auf, weil im Anlaufbereich das Druckeinstellventil abgesperrt und erst

- 3 -

beim Erreichen eines hohen Einstelldrucks einen Durchfluß ermöglicht.

Damit auch im Anlaufbetrieb des Motors ein Durchfluß gewährleistet ist, sieht die Erfindung nach Anspruch 4 vor, daß zur Ausbildung eines strömungsabhängigen Ventils an die Druckleitung eine zylindrische Ventilkammer angeschlossen ist, in der mit Spiel eine Kugel geführt ist, daß auf der Abströmseite der Ventilkammer ein Ventilsitz ausgebildet ist und daß ferner auf die Kugel ein Druckelement in abhebendem Sinn einwirkt. Dieses strömungsabhängige Ventil läßt im Anlaufbetrieb einen Durchfluß zu, so daß die Belastung des Motors in der Anlaufphase gering bleibt. Mit zunehmendem Durchfluß bildet sich innerhalb des strömungsabhängigen Ventils eine Druckdifferenz aus, die die Kugel an dem Ventilsitz zur Anlage bringt, so daß das strömungsabhängige Ventil in Abhängigkeit von dem zunehmenden Durchfluß absperrt. Damit ist gewährleistet, daß bei geringem Durchfluß, also während der Anlaufphase, ein im wesentlichen ungehinderter Rückstrom des Hydraulikmediums gewährleistet ist, so daß die Anlaufbelastung des Motors gering ist.

In weiterer Ausbildung ist nach Anspruch 5 vorgesehen, daß die Abströmseite der Ventilkammer durch eine Absperrbuchse abgeschlossen ist, deren Stirnrand den genannten Ventilsitz bildet. Dadurch erreicht man eine besonders einfache Ausbildung des Ventilsitzes.

Ferner sieht die Erfindung vor, daß innerhalb der Absperrbuchse eine Schraubendruckfeder als Druckelement angeordnet ist, die sich auf einem radial innerhalb der Absperrbuchse angeordneten Stift abstützt. Die Schraubendruckfeder ist innerhalb der Absperrbuchse angeordnet und hebt die Kugel beim Unterschreiten eines Schwellenwertes für den Druck des Hydraulikmediums von ihrem Ventilsitz ab.

In weiterer Ausbildung der Erfindung ist die Absperrbuchse auch als Schlauchtülle wirksam. Der Rückflußschlauch kann direkt auf die Absperrbuchse aufgezogen werden. Der Rückflußschlauch dichtet auch die Durchgänge für den Stift ab.

Eine Ausführungsform der Erfindung wird im folgenden unter Bezugnahme auf die anliegende Zeichnung erläutert, in der darstellen:

Fig. 1 ein hydraulisches Schaltbild eines Hydraulikkreises mit einem Druckeinstellventil nach der Erfindung und

Fig. 2 einen Schnitt durch ein Druckeinstellventil nach der Erfindung.

Eine von einem Motor 1 angetriebene Zahnradpumpe 2 beschickt einen Hydraulikkreis 3. Der Hydraulikkreis 3 ist mit einem Druckmesser 4 ausgestattet und über ein Schaltventil 5 an eine Verbrauchereinrichtung angeschlossen, z.B. an eine Sprüheinrichtung. Ein Druckeinstellventil 7 dient zur Voreinstellung des Drucks innerhalb des Hydraulikkreises, damit der voreingestellte Druck auch nach Betätigung des Schaltventils 5 erhalten bleibt. Der eingestellte Druck soll unabhängig von der Belastung durch die Verbrauchereinrichtung sein.

Das Druckeinstellventil besitzt einen Anschlußstutzen 8 für den Anschluß einer Druckleitung des Hydraulikkreises 3. Von dem Anschlußstutzen 8 führt eine Ventilöffnung 9 zu einer zylindrischen Ventilkammer 10, die über einen Anschlußstutzen 11 an eine Rückflußleitung 12 angeschlossen ist. Die Ventilkammer 10 besitzt ein Innengewinde 13, in das eine Verschlußbuchse 14 eingeschraubt ist. In einem Durchgang 15 mit Innengewinde ist eine Einstellspindel 16 mit einem Einstellgriff 17 geführt. Die Einstellspindel 16 ist abgedichtet durch den Durchgang 15 geführt. An der Einstellspindel 16 sitzt ein Federteller 18, der als Anlage für eine Schraubendruckfeder 19 dient. Deren gegenüberliegendes Ende liegt an einem weiteren Federteller 20 an. Der Federteller 20 liegt an einer Ventilkugel 21 an. Die Ventilkugel 21 wirkt mit der Ventilöffnung 9 zusammen und kommt an deren Stirnrand zur Anlage.

Der Durchmesser der Ventilkugel 21 ist nur geringfügig größer als der Durchmesser der Ventilöffnung 9. Der
Durchmesser der Ventilkugel 21 ist 0,3 bis 15 %, vorzugsweise 0,3 bis 3 % größer als der Durchmesser der Ventilöffnung 9. Die Schraubendruckfeder 19 muß möglichst
weich sein, d.h. die Steifigkeit der Schraubendruckfeder
soll einen kleinen Wert haben, damit sich der voreingestellte Druck bei einer Verschiebung der Ventilkugel 21
möglichst wenig ändert.

Mithilfe des Einstellgriffs 17 ist der Druck innerhalb
des Hydraulikkreises 3 voreinstellbar, so-lange das
Schaltventil 5 geschlossen ist. Der eingestellte Druck
kann an dem Druckmesser 4 abgelesen werden. Wenn das
Schaltventil 5 geöffnet wird und Druckmittel durch die
Verbrauchereinrichtung 6 ausströmt, ändert sich der
Durchfluß des Druckeinstellventils 7 so weit, daß der
eingestellte Druck des Hydraulikkreises 3 im wesentlichen
konstant bleibt. Es läßt sich ohne weiteres erreichen,
daß die Druckschwankung 10 % des eingestellten Wertes
nicht übersteigt. Dieses ist einerseits darauf zurückzuführen, daß die Ventilkugel 21 nur einen geringfügig
größeren Durchmesser als die Ventilöffnung 9 hat, so daß
sich bei geringen Verschiebungen der Ventilkugel 21 der
Durchflußquerschnitt ziemlich stark ändert. Außerdem
gewährleistet die weiche Schraubendruckfeder 19 eine
Aufrechterhaltung des voreingestellten Druckes auch bei
Verschiebungen der Ventilkugel 21.

Wenn der Motor 1 abgeschaltet ist, sperrt selbstverständlich die Ventilkugel 21 unter der Wirkung der
Schraubendruckfeder 19 die Ventilöffnung 9 ab. Dieses
gilt besonders, wenn ein hoher Wert des Voreinstelldruckes eingestellt ist. Beim Einschalten der Anlage und
beim Anlaufen des Motors 1 ist zunächst kein Durchfluß
vorhanden, bis der Druck des Hydraulikkreises den voreingestellten Wert übersteigt. Deshalb treten beim Anlaufen des Motors 1 Schwierigkeiten auf. Infolgedessen muß innerhalb des Druckeinstellventils eine Anlaufhilfe geschaffen werden. Hierzu sieht die Erfindung ein strömungsabhängiges Ventil vor. An die Druckleitung 8 ist eine weitere zylindrische Ventilkammer 22 angeschlossen, in der mit Spiel eine Kugel 23 geführt ist. Die Abströmseite der Ventilkammer 22 ist durch eine Absperrbuchse 24 abgeschlossen, die in ein Gewinde 25 eingeschraubt ist und die außerdem eine Schlauchtülle 26 aufweist. Die Wandung der Schlauchtülle 26 weist einen radialen Durchgang auf, in dem ein Stift 27 angeordnet ist, der als Abstützung für eine Schraubendruckfeder 28 dient. Die Schraubendruckfeder 28 liegt an der Kugel 23 an. Das Stirnende 29 der Absperrbuchse 24 ist als Ventilsitz ausgebildet. Auf die Schlauchtülle 26 ist ein Rückflußschlauch 30 aufgezogen, der gleichzeitig den radialen Durchgang für den Stift 27 abdichtet.

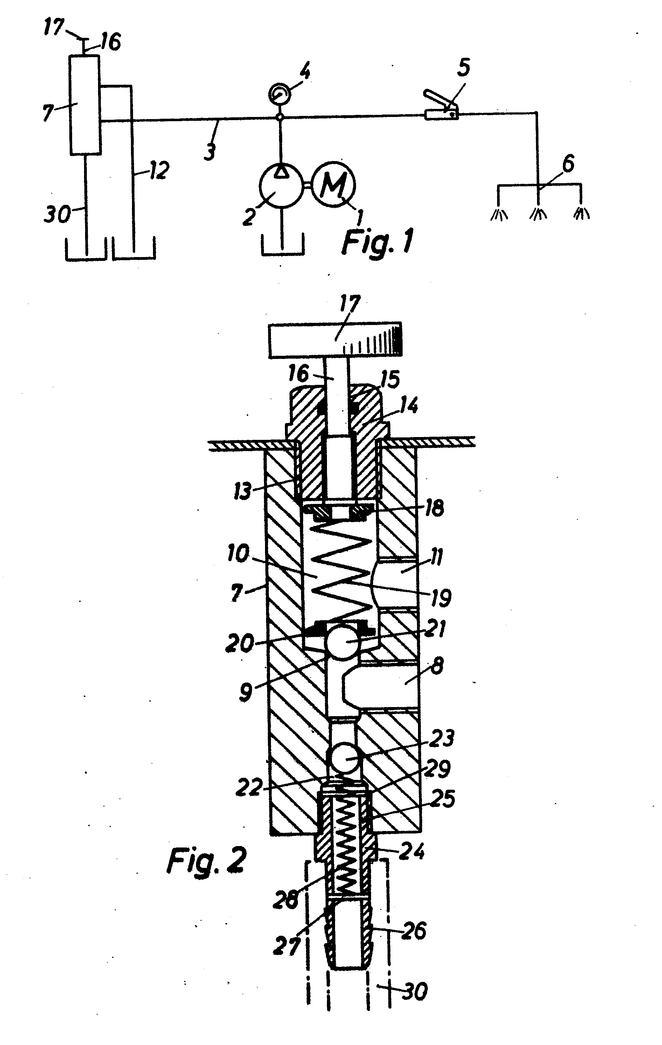

Die Schraubendruckfeder 28 hebt die Kugel 23 von dem Ventilsitz 29 ab, so lange kein Druck und kein Durchfluß innerhalb des Hydraulikkreislaufs vorhanden ist. Die Kugel 23 befindet sich dann in der in Fig. 2 eingezeichneten Stellung. Wenn der Motor 1 anläuft und die Zahnradpumpe 2 mit der Förderung des Hydraulikmediums beginnt, steigt der Druck innerhalb des Hydraulikkreises 3 an. Das Hydraulikmedium strömt durch die Ventilkammer 22 in den Rückflußschlauch 30. Dabei strömt das Hydraulikmedium durch den Ringspalt zwischen der Kugel 23 und der Innenwandung der Ventilkammer 22. Die Strömung durch diesen Ringspalt führt zur Ausbildung einer Druckdifferenz. Mit dem Anlaufen des Motors 1 steigt der Durchfluß innerhalb des Hydraulikkreises an, so daß auch der Durchfluß durch den genannten Ringspalt zunimmt. Infolgedessen nimmt die Druckdifferenz zu. Dadurch wird die Kugel 23 entgegen der Vorspannung der Schraubendruckfeder 28 bewegt und gelangt schließlich auf den Ventilsitz 29,

0013716

so daß dadurch das strömungsabhängige Ventil abgesperrt wird. Der Hydraulikkreis ist damit auf dieser Seite abgeschlossen, so daß nunmehr allein das Druckeinstellventil wirksam ist. Die Erfindung gewährleistet damit ein störungsfreies Anlaufen des Motors und der Zahnradpumpe. Die Erfindung stellt also sicher, daß die Hydraulikanlage einwandfrei anlaufen kann. Das Druckeinstellventil ist so bemessen, daß im Leerlaufbetrieb die volle Fördermenge durch dieses Druckeinstellventil ausfließen kann. Beim Anschluß der Verbrauchereinrichtung ergibt sich kein wesentlicher Druckabfall innerhalb des Hydraulikkreises, auch wenn das Druckeinstellventil nahezu vollständig schließt. Bei einem Maximaldruckbereich bis zu 25 Bar oder mehr, kann der Druckabfall unterhalb 10 % gehalten werden.

Patentanwälte
Dr. W. Haßler
Dipl.-Chem. F. Schrumpf
Postfach 17 04

5880 Lüdenscheid

Lüdenscheid, 27. Dezember 1978 - 9
A 78 186

Anmelderin: Firma Werdohler Pumpenfabrik
Rickmeier GmbH
Langenholthauser Straße
5983 Balve 2

## Druckeinstellventil für einen Hydraulikkreis

### Patentansprüche

1. Druckeinstellventil für einen Hydraulikkreis einer Verdrängerpumpe, wobei das Druckeinstellventil innerhalb einer mit einer Rückflußleitung verbundenen Ventilkammer einen durch eine Feder vorgspannten Ventilkörper aufweist, dadurch gekennzeichnet, daß als Ventilkörper eine Ventilkugel vorgesehen ist, deren Durchmesser 0,5 bis 15 % größer als der Durchmesser der Ventilöffnung ist und daß die Steifigkeit der Feder möglichst klein ist.

2. Druckeinstellventil nach Anspruch 1, dadurch gekennzeichnet, daß der Durchmesser der Ventilkugel 0,5 bis 3% größer als der Durchmesser der Ventilöffnung ist.

3. Druckeinstellventil nach Anspruch 1 oder 2, dadurch gekennzeichnet, daß die Feder an einem die Ventilkugel übergreifenden Federteller und an einem an einer Einstellspindel sitzenden Federteller anliegt.

4. Druckeinstellventil nach einem der Ansprüche 1 bis 3, dadurch gekennzeichnet, daß zur Ausbildung eines strömungsabhängigen Ventils an die Druckleitung eine zylindrische Ventilkammer angeschlossen ist, in der mit Spiel eine Kugel geführt ist, daß auf der Abströmseite der Ventilkammer (22) ein Ventilsitz ausgebildet ist und daß ferner auf die Kugel ein Druckelement in abhebendem Sinn einwirkt.

5. Druckeinstellventil nach Anspruch 4, dadurch gekennzeichnet, daß die Abströmseite der Ventilkammer durch eine Absperrbuchse abgeschlossen ist, deren Stirnrand den genannten Ventilsitz bildet.

6. Druckeinstellventil nach Anspruch 5, dadurch gekennzeichnet, daß innerhalb der Absperrbuchse eine Schraubendruckfeder als Druckelement angeordnet ist, die sich auf einem radial innerhalb der Absperrbuchse angeordneten Stift abstützt.

7. Druckeinstellventil nach Anspruch 6, dadurch gekennzeichnet, daß die Absperrbuchse auch als Schlauchtülle wirksam ist.

0013716

Fig. 1

Fig. 2

Europäisches
Patentamt

**EUROPÄISCHER RECHERCHENBERICHT**

00137.16

Nummer der Anmeldung

EP 79 10 4845

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 732 890 (SMITH)<br><br>* Spalte 1, Zeilen 30-68; Spalte 3, Zeile 57 - Spalte 4, Zeile 20; Abbildungen 1-3 *<br><br>-- | 1,4 |
| | US - A - 3 514 223 (HARE)<br><br>* Spalte 3, Zeilen 38-54; Abbildung 3A *<br><br>-- | 1 |
| A | US - A - 2 511 494 (COHEN)<br><br>* Spalte 4, Zeilen 12-32; Abbildung *<br><br>-- | |
| A | US - A - 3 720 373 (LEVEY)<br><br>* Spalte 4, Zeile 54 - Spalte 6, Zeile 13; Abbildung *<br><br>-- | |
| A | FR - A - 2 147 739 (ADVANCED PRODUCTS)<br><br>* Anspruch 1; Abbildung 1 *<br><br>---- | |

**KLASSIFIKATION DER ANMELDUNG (Int.Cl. 3)**

F 16 K 15/04
17/04//
B 05 B 9/00

**RECHERCHIERTE SACHGEBIETE (Int. Cl. 3)**

F 16 K
B 05 B
F 04 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort<br>Den Haag | Abschlußdatum der Recherche<br>25-03-1980 | Prüfer<br>V. REETH |
|---|---|---|

EPA form 1503.1 06.78